(19)

**Europäisches Patentamt**
**European Patent Office**
**Office européen des brevets**

(11) **EP 4 682 722 A1**

(12) **EUROPEAN PATENT APPLICATION**

(43) Date of publication:
**21.01.2026 Bulletin 2026/04**

(21) Application number: **25187223.0**

(22) Date of filing: **03.07.2025**

(51) International Patent Classification (IPC):
*G06F 9/50* (2006.01)     *G06F 11/34* (2006.01)

(52) Cooperative Patent Classification (CPC):
**G06F 9/5044; G06F 9/505; G06F 11/3428**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   **08.07.2024   GB 202409887**

(71) Applicant: **Vodafone Group Services Limited**
**Newbury RG14 2FN (GB)**

(72) Inventors:
• **LAW, Alan**
  **London, W2 6BY (GB)**
• **SAMUEL, Issac**
  **London, W2 6BY (GB)**
• **DUNKIN, Andrew**
  **London, W2 6BY (GB)**

(74) Representative: **Boult Wade Tennant LLP**
**Salisbury Square House**
**8 Salisbury Square**
**London EC4Y 8AP (GB)**

(54) **A METHOD OF DETERMINING A COMPATIBILITY METRIC OF A HARDWARE PLATFORM FOR RUNNING AN OPEN RAN APPLICATION**

(57)     A method of determining a compatibility metric of a hardware platform for running an Open Radio Access Network, Open RAN, application is provided. The hardware platform comprises a plurality of hardware elements. The method comprises, for each of the plurality of hardware elements, increasing an operational load on the hardware element by adjusting a value of one or more operational parameters selected from a plurality of operational parameters, and for each of the one or more operational parameters, either: detecting that the hardware element has failed and storing the value of the operational parameter when failure of the hardware element is detected; or storing the value of the operational parameter when the operational load on the hardware element is greatest. The method further comprises, for each of the plurality of hardware elements, determining a compatibility score for the hardware element based on the stored value of each of the one or more operational parameters. The method further comprises determining a compatibility metric for the hardware platform by combining the compatibility scores for each of the hardware elements.

Fig. 1

## Description

## Technical field

The present invention relates to quantifying compatibility of hardware components in a cloud platform. In particular, the invention relates to determining a compatibility index of a hardware platform for running an Open RAN application.

## Glossary

RAN - Radio Access Network
MNO - Mobile Network Operator
GPU - Graphics Processing Unit
O-RAN - Open RAN Alliance
O-DU - Open Distributed Unit
O-CU - Open Central Unit
O-RU - Open Radio Unit
PHY - Physical Layer (L1)
MAC - Medium Access Control (L2)
RLC - Radio Link Control (L2)
PDCP - Packet Data Convergence Protocol (L3)
RRC - Radio Resource Control (L3)
SDAP - Service Data Adaptation Protocol
OS - Operating System
API - Application Programming Interface
SMO - Service Management and Orchestration
DMS - Deployment Management Services
NF - Network Function
IMS - Infrastructure Management Services
QoE - Quality of Experience
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications (2G)
GSMA - GSM Association
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System (3G)
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

## Background

Open RAN is a technology architecture concept directed to decoupling the hardware and software components of a Radio Access Network (RAN). It is a RAN that includes open interoperable interfaces and virtualization. In prior art (Non-Open) RANs, the hardware and software components are typically proprietary. Non-Open RAN equipment is generally obtained from a single vendor to ensure seamless functionality, security, and efficiency. In contrast, Open RAN introduces open standards for both hardware and software, enabling interoperability among various network elements. For Mobile Network Operators (MNOs), Open RAN holds strategic importance as it promotes vendor diversity, allowing the integration of new suppliers and enhancing supply chain resilience. It also brings energy efficiency gains by enabling targeted improvements in specific areas of the RAN. Furthermore, Open RAN facilitates innovation and competition by providing a more dynamic and efficient network environment. Additionally, it provides an opportunity for collaboration with specialist suppliers and facilitates resource optimization by allowing upgrades to software, without necessitating hardware replacements. Open RAN is important in the long-term network innovation strategy of MNOs, offering energy efficiency, supply chain diversification, resilience enhancement, and facilitating innovation and competition.

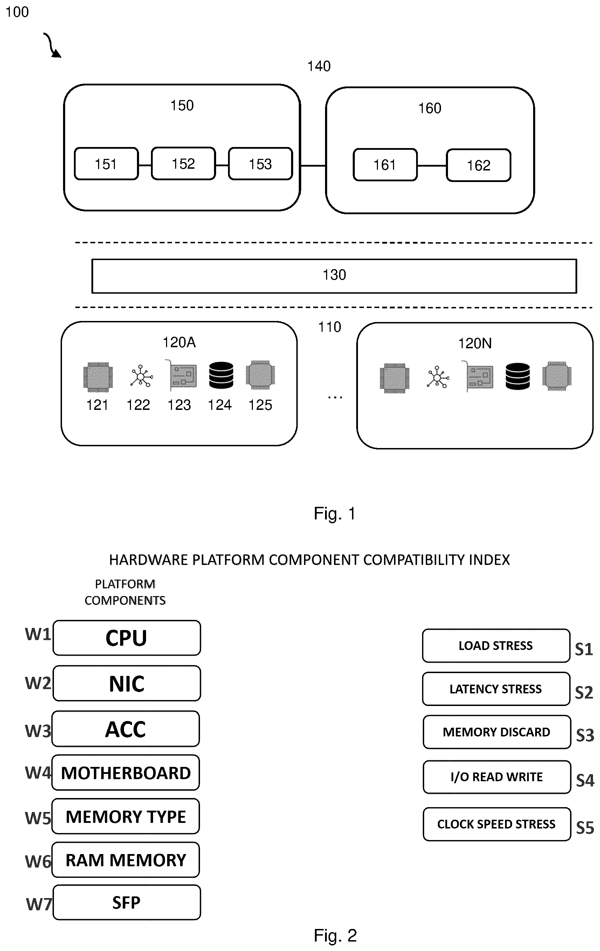

Fig. 1 illustrates some of the elements of an example Open RAN system 100, which is implemented as a cloud computing platform (O-Cloud). The system 100 may be described with reference to different hardware and software layers of the platform.

At the O-Cloud Node layer 110, the system comprises one or more physical infrastructure nodes 120A, 120N that meet O-RAN requirements. Each physical infrastructure node 120A comprises computing 121, networking 122, GPU 123, and storage 124 components, alongside acceleration technologies 125 for RAN operations (such as forward error correction and other computationally intensive operations that are offloaded to dedicated hardware). Each physical infrastructure node 120A, 120N is configured to host the relevant O-RAN network functions 150, 160, which are implemented at the Open RAN application layer 140. The network functions 150, 160 implemented at the Open RAN application layer 140 may include O-CU 160, O-DU 150, and O-RU.

The O-CU, O-DU and O-RU network function deployments comprise functional elements for processing different protocols in the RAN protocol stack. The O-DU 150 comprises:

- a High-PHY component 151 to perform the scrambling, modulation, layer mapping, precoding, resource element mapping, and I/Q compression elements of the PHY layer;
- a MAC component 152; and
- a RLC component 153.

The O-CU comprises:

- a PDCP component 161; and
- a RRC/SDAP component 162.

The O-DU 150 may further comprise an Open RAN fronthaul interface to connect the O-DU to one or multiple O-RUs.

At the O-Cloud hypervisor or containers / OS layer 130, there exists a collection of cloud functions to enable the Open RAN applications 150, 160 to run on the one or more O-Cloud hardware nodes 120A. The cloud functions may comprise supporting software components, such as an operating system, Containers (stand-alone executable software packages), a Container Orchestration Platforms (such as Kubernetes), a container runtime, and the like. The cloud functions may also include the corresponding management and orchestration functions.

The O-Cloud serves as a fundamental component for facilitating cloud computing capabilities within the context of RAN network functions. It comprises both hardware and software elements. In particular, its software exposes open APIs, fostering interoperability and flexibility across various vendor solutions. With a decoupled architecture, the O-Cloud allows for sourcing hardware from different vendors, promoting neutrality and flexibility in hardware selection. It supports Service Management and Orchestration (SMO), enabling homing decisions and selecting Deployment Management Services (DMS) for Network Function (NF) Deployments. The DMS handles workload placement, lifecycle management, and resource allocation within O-Cloud Node Clusters, while Infrastructure Management Services (IMS) ensure the infrastructure's availability, reliability, and performance. Moreover, the O-Cloud offers automation capabilities, enhancing efficiency and reducing manual intervention, ultimately supporting efficient resource utilization and scalability for RAN network functions in a cloud-native environment.

The Open RAN architecture and environment enables interoperability of hardware from different hardware providers. The hardware components illustrated in Fig. 1, such as accelerators, NIC cards, motherboards, CPUs, GPUs, security components, storage components, and the like, may interoperate flexibly together to provide the hardware resources required by the Open RAN applications. These hardware components may be manufactured by different suppliers and with variety of specifications and may not be specifically designed to operate together or tested together (or only aspects of the interworking may be checked). Nevertheless, these components may be designed to conform to Open RAN standards and therefore interoperability may be enabled by enforcing these standards. Despite this, poor compatibility of these components can lead to performance issues. This can result in field failures, requiring re-working and upgrades, which can lead to poor QoE (Quality of Experience) for the end subscribers.

## Summary

In view of the problems identified above, it is an objective of the proposed methods to establish a compatibility metric for hardware elements in a hardware platform. The compatibility metric is obtained by adjusting one or more operational parameters to stress test the individual hardware elements in the hardware platform. Testing may be performed by a common piece of software that runs on the various interworking hardware components and tests the performance limits of each. In some cases, the operational load is increased until the interworking between components breaks. This testing and determination of a compatibility metric may allow operators to determine (in a quantifiable way) the compatibility & scalability of the various hardware components. This may help to establish: a) the compatibility of the components; b) any reasons for incompatibility; and c) the areas which will break under types of stress. The overall compatibility index may assist operators, vendor and suppliers to establish and quantify the compatibility of their hardware components.

A method of determining a compatibility metric of a hardware platform for running an Open Radio Access Network, Open RAN, application is provided. The hardware platform comprises a plurality of hardware elements. The method comprises, for each of the plurality of hardware elements, increasing an operational load on the hardware element by adjusting a value of one or more operational parameters selected from a plurality of operational parameters, and for each of the one or more operational parameters, either: detecting that the hardware element has failed and storing the value of the operational parameter when failure of the hardware element is detected; or storing the value of the operational parameter when the operational load on the hardware element is greatest. The method further comprises, for each of the plurality of hardware elements, determining a compatibility score for the hardware element based on the stored value of each of the one or more operational parameters. The method further comprises determining a compatibility metric for the hardware platform by combining the compatibility scores for each of the hardware elements.

The operational load on the hardware element may also be referred to as a "stress".

Alternatively, the method may comprise increasing the operational load on the hardware element by adjusting the value of the operational parameter and the storing the value of the operational parameter at which the operational load is greatest, and the hardware element is still functional.

The compatibility metric may provide a relative measure of a suitability of the hardware platform for running an Open RAN application or virtual RAN application.

The compatibility metric may provide a measure of the mutual suitability of the hardware elements of the hardware platform for operating with each other.

In other words, the compatibility metric may provide a measure of co-compatibility of the hardware elements of the hardware platform.

Adjusting the value of the operational parameter may comprise adjusting the value of the operational parameter within a predetermined range.

Adjusting the value of the operational parameter may comprise adjusting the value of the operational parameter monotonically between two extents of the predetermined range.

In other words, adjusting the value of the operational parameter may comprise adjusting the value of the operational parameter between a top of the predetermined range and a bottom of the predetermined range.

Adjusting the value of the operational parameter may comprise adjusting the value of the operational parameter linearly between the two extents of the predetermined range.

Adjusting the value of the operational parameter may comprises incrementally adjusting the value of the operational parameter.

The plurality of hardware elements may comprise one or more of:

a central processing unit, CPU;
a network interface controller, NIC;
an accelerator;
a graphics processing unit, GPU;
a motherboard;
a memory type;
a random access memory, RAM, quantity; and
a small form-factor pluggable, SFP.

The plurality of operational parameters may comprise one or more of:

a computational load;
a latency;
a memory discard rate;
an I/O read/write rate; and
a clock speed.

A computational load may comprise a rate of instructions executed by the CPU.

A clock speed may be a clock frequency.

The method may further comprise, for each hardware element, selecting the one or more operational parameters from the plurality of operational parameters based on the hardware element.

If the hardware element is a network interface controller, NIC, the one or more operational parameters may comprise a computational load and/or a latency.

If the hardware element is a central processing unit, CPU, the one or more operational parameters may comprise a computational load and/or a clock speed.

If the hardware element is a memory type or a random access memory, RAM, quantity, the one or more operational parameters may comprise a memory discard rate and/or an I/O read/write rate.

The one or more operational parameters may comprise two or more operational parameters.

In other words, for each hardware element, there may be at least two operational parameters to adjust.

Where two types of stress on a hardware element are varied (e.g., computational load and latency), each stress may be varied in a separate test, while keeping the other constant.

Nevertheless, hardware functions that are not mutually exclusive may also be stress tested in aggregation. Therefore, in an alternative method, both types of stress may be raised together in a single test until the hardware element fails.

Each of the plurality of hardware elements may be assigned a weighting. Combining the compatibility scores for each of the hardware elements may comprise adjusting each of the compatibility scores based on the respective weighting.

A system configured to perform any of the methods described above is also provided.

The system may be a test rig configured to perform the methods described above by applying the stresses to the hardware elements, storing the values of the operational parameters used to apply the stresses and determining a compatibility metric for the hardware platform based on the values of the operational parameters.

A computer program comprising instructions that, when executed on a processor, cause the processor to perform any of the methods described above is also provided.

**Brief description of the drawings**

Fig. 1 illustrates an example cloud platform.
The present invention is described below with reference to the non-limiting examples illustrated in the following drawings.

Fig. 2 illustrates a schematic of a testing method according to a specific example.

Fig. 3 illustrates another method according to a specific example.

Fig. 4 illustrates another method according to a specific example.

Fig. 5 illustrates another method according to a specific example.

Fig. 6 illustrates results of compatibility testing according to a specific example.

**Detailed description**

The cloud platform that supports Open RAN applications comprises a number of hardware elements, such as accelerators, NIC cards, Motherboards, CPUs, GPS, security, and the like. These hardware elements are required to work together to allow the Open RAN applications to operate effectively. These hardware components may be manufactured by different suppliers and with variety of specifications. This variety can be advantageous for creating a suitable hardware platform for an Open RAN system, since the hardware platform may be designed flexibly by selecting suitable hardware elements. However, the large variety of available hardware elements can also give rise to problems, as it may be infeasible for manufacturers to test a hardware element alongside every other hardware component available for inclusion in the hardware platform (and often, only aspects of the interworking are checked). Compatibility of these hardware components can therefore present unexpected issues when elements are combined together in a hardware platform and operated in the field. This can, in some cases, lead to operational failure, requiring reworking, upgrades and swapping of components. This can negatively impact end subscriber QoE.

The proposed methods therefore provide a method of determining a compatibility metric for the hardware platform. The proposed methods apply stress to the hardware platform by adjusting various operational parameters using a computer program that runs on the various interworking hardware components. The computer program tests the operational limits of the hardware components by increasing the operational load (in some cases, until their interworking breaks). This stress testing allows network operators to clearly determine in a quantifiable way the compatibility & scalability of the various hardware elements. If results are poorer than expected, the results may also be used to identify the reasons for incompatibility between the hardware elements. Moreover, the tests may identify which areas which will break under types of stress, which may be useful for planning upgrades.

Fig. 2 illustrates an example method for testing a hardware platform. The hardware platform comprises a plurality of hardware elements, such as: W1-CPU, W2-NIC, W3-accelerators (ACC), W4-motherboard, W5-memory type, W6-RAM memory and W7-SFP.

A plurality of operational parameters may be adjusted, to increase the operational load on each hardware element in turn. The operational parameters may comprise, for example: a computational load; a latency; a memory discard rate; an I/O read/write rate; and a clock speed.

To determine the operational limits of the hardware platform, each element may be tested until it fails. Each element may be more susceptible to a different type of load. Therefore, to obtain the failure loads for each element, different parameters may be adjusted in turn to cause the elements to fail. The values of the parameters that cause failure may be stored and used to determine the compatibility index.

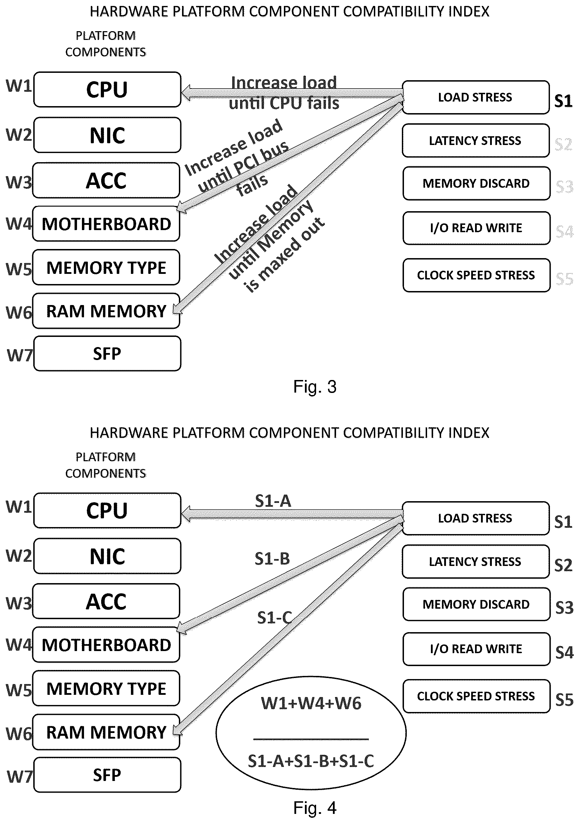

In the example illustrated in Fig. 3, the load stress in increased until each of the CPU, motherboard and RAM memory fail. As illustrated in Fig. 4, the value of the load stress that causes each component to fail is stored (S1-A is the load stress that causes the CPU to fail, S1-B is the load stress that causes the motherboard to fail, and S1-C is the load stress that causes the RAM memory to fail).

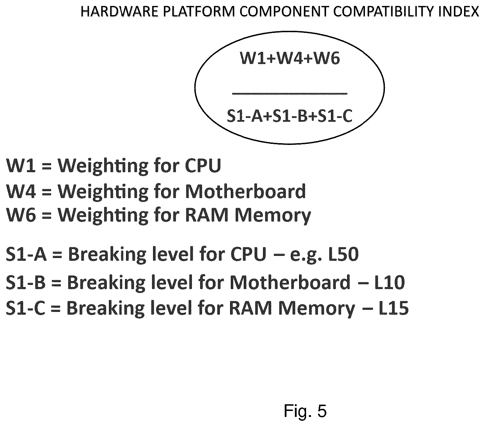

As illustrated in Fig. 5, the values of the operational parameters (in this case, the load stresses S1-A, S1-B and S1-C) are combined, using weighting values (Wxx) associated with each component (W1, W4 and W6), to provide a compatibility metric using the equation illustrated. The values of the operational parameters may be relative, rather than absolute values, such as L50, L10, L15, and the like.

In another example, a compatibility metric formula may be provided as follows:

$$\text{Compatibility metric} = 100 - \text{Sum (Wxx/Sxx)}$$

The sum may be a sum over the plurality of hardware elements and/or over the one or more operational parameters.

Where Wxx is a weighting applied to the respective hardware element.

Wxx may be defined for each of the plurality of hardware elements to be checked for their compatibility.

Sxx denotes the value (e.g., S1-A, S1-B, S1-C etc.) of the operational parameter that causes the respective hardware element to fail (for each of the different types of stresses that can be exerted on the hardware components, e.g., S1-Load, S2-Latency, S3-Memory discard rate, S4-I/O read/write rate; S5-clock speed, and so on).

If the hardware elements are equally weighted, each may have a weighting of 1.

For example, when the Load and Latency stresses are applied and inexorably increased in levels until the hardware components functions break, the final compatibility level of the hardware component (e.g. NIC, if it is the first to break) for the type of stress is reached. This may be stored as the S1 and S2 levels (for Load and Latency stresses respectively) for NIC compatibility.

Similarly, the levels of clock speed S5 and Load stress S1 could be increased to reach breaking points for W1 (CPU). Stress S3 of Memory discards and Stress S4 of I/O Read/Writes can be used to find the breaking point for W5 and W6 for memory type and amount of memory, respectively.

These values of the operational parameters that induce failure for various hardware components are recorded and combined into a novel formula that provides the compatibility metric of the hardware components. The compatibility metric is based on the breaking points of each of the hardware elements for various stresses.

In some examples, a compatibility metric for each hardware element is determined and the compatibility metrics for the hardware elements are combined to provide the compatibility metric for the hardware platform.

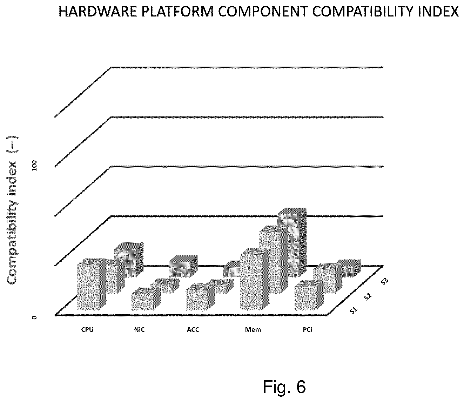

Fig. 6 illustrates results of compatibility testing according to a specific example, in which the individual scores for each hardware element and for each operational parameter are shown separately.

The compatibility metric for the hardware platform may be a number from 75 to 100, with 100 being that no levels of stress can break the hardware component operations, which is the ideal. The closer the compatibility Index is to 100, the better the compatibility of the hardware components interworking with each other on the hardware platform.

The above methods may provide an easy way for operators and vendors to conclude and agree their compatibility for working a specific hardware platform. As the complexity of the hardware platform increases, and further hardware elements and operational parameters are identified, these can be added into the formula. In this way, the compatibility metric may be adjusted as hardware platforms evolve over time and failure modes are identified.

Although specific embodiments have been described above, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server, for instance, this may actually be a pair of servers (primary and failover), for redundancy.

Where this application refers to a "network entity", the skilled person would understand that the network entity may actually be provided by a plurality of servers that are geographically distributed.

An Open Radio Access Network as described above may be used to provide a cellular network serving one or more User Equipments, UEs. Examples of the UE include various fixed and mobile devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above examples are described in relation to specific radio access networks (e.g., 4G and 5G radio access networks), these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE.

3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems. Moreover, the technical features of the present invention may be applied to future iterations of multiple access systems defined in 3GPP standards, such as (but not limited to) 6G.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a cellular network may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a network entity, a server or a cell) means "one or more" (for instance one or more UEs, one or more network entities, one or more servers, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

**Claims**

1. A method of determining a compatibility metric of a hardware platform for running an Open Radio Access Network, Open RAN, application, wherein the hardware platform comprises a plurality of hardware elements, the method comprising:

   for each of the plurality of hardware elements:

   increasing an operational load on the hardware element by adjusting a value of one or more operational parameters selected from a plurality of operational parameters, and for each of the one or more operational parameters, either:

   detecting that the hardware element has failed and storing the value of the operational parameter when failure of the hardware element is detected; or storing the value of the operational parameter when the operational load on the hardware element is greatest;

   determining a compatibility score for the hardware element based on the stored value of each of the one or more operational parameters;

   determining a compatibility metric for the hardware platform by combining the compatibility scores for each of the hardware elements.

2. The method of claim 1, wherein the compatibility metric provides a relative measure of a suitability of the hardware platform for running an Open RAN application or virtual RAN application.

3. The method of claim 1, wherein the compatibility metric provides a measure of the mutual suitability of the hardware elements of the hardware platform for operating with each other.

4. The method of any preceding claim, wherein adjusting the value of the operational parameter comprises adjusting the value of the operational parameter within a predetermined range.

5. The method of claim 4, wherein adjusting the value of the operational parameter comprises adjusting the value of the operational parameter monotonically between two extents of the predetermined range.

6. The method of any preceding claim, wherein adjusting the value of the operational parameter comprises incrementally adjusting the value of the operational parameter.

7. The method of any preceding claim, wherein the plurality of hardware elements comprise one or more of:

   a central processing unit, CPU;
   a network interface controller, NIC;
   an accelerator;
   a graphics processing unit, GPU;
   a motherboard;
   a memory type;
   a random access memory, RAM, quantity; and
   a small form-factor pluggable, SFP.

8. The method of any preceding claim, wherein the plurality of operational parameters comprise one or more of:

   a computational load;
   a latency;
   a memory discard rate;
   an I/O read/write rate; and
   a clock speed.

9. The method of any preceding claim, wherein the method further comprises for each hardware element, selecting the one or more operational parameters from the plurality of operational parameters based on the hardware element.

10. The method of claim 9, wherein, if the hardware element is a network interface controller, NIC, the one or more operational parameters comprises a computational load and/or a latency.

11. The method of claim 9 or claim 10, wherein, if the hardware element is a central processing unit, CPU, the one or more operational parameters comprises a computational load and/or a clock speed.

12. The method of any of claims 9 to 11, wherein, if the hardware element is a memory type or a random access memory, RAM, quantity, the one or more operational parameters comprises a memory discard rate and/or an I/O read/write rate.

13. The method of any preceding claim, wherein the one or more operational parameters comprises two or more operational parameters.

**14.** A system configured to perform the method of any preceding claim.

**15.** A computer program comprising instructions that, when executed on a processor, cause the processor to perform the method of any of claims 1 to 13.

100

140

150

151 152 153

160

161 162

130

110

120A

121 122 123 124 125

120N

...

Fig. 1

HARDWARE PLATFORM COMPONENT COMPATIBILITY INDEX

PLATFORM
COMPONENTS

W1 | CPU
W2 | NIC
W3 | ACC
W4 | MOTHERBOARD
W5 | MEMORY TYPE
W6 | RAM MEMORY
W7 | SFP

LOAD STRESS | S1
LATENCY STRESS | S2
MEMORY DISCARD | S3
I/O READ WRITE | S4
CLOCK SPEED STRESS | S5

Fig. 2

HARDWARE PLATFORM COMPONENT COMPATIBILITY INDEX

PLATFORM
COMPONENTS

| W1 | **CPU** | | *Increase load until CPU fails* | LOAD STRESS | **S1** |
| W2 | **NIC** | | *Increase load until PCI bus fails* | LATENCY STRESS | S2 |
| W3 | **ACC** | | | MEMORY DISCARD | S3 |
| W4 | **MOTHERBOARD** | | *Increase load until Memory is maxed out* | I/O READ WRITE | S4 |
| W5 | **MEMORY TYPE** | | | CLOCK SPEED STRESS | S5 |
| W6 | **RAM MEMORY** | | | | |
| W7 | **SFP** | | | | |

Fig. 3

HARDWARE PLATFORM COMPONENT COMPATIBILITY INDEX

PLATFORM
COMPONENTS

| W1 | **CPU** | S1-A | LOAD STRESS | **S1** |
| W2 | **NIC** | S1-B | LATENCY STRESS | S2 |
| W3 | **ACC** | | MEMORY DISCARD | S3 |
| W4 | **MOTHERBOARD** | S1-C | I/O READ WRITE | S4 |
| W5 | **MEMORY TYPE** | | CLOCK SPEED STRESS | S5 |
| W6 | **RAM MEMORY** | | | |
| W7 | **SFP** | | | |

$$\frac{W1+W4+W6}{S1\text{-}A+S1\text{-}B+S1\text{-}C}$$

Fig. 4

HARDWARE PLATFORM COMPONENT COMPATIBILITY INDEX

$$\frac{W1+W4+W6}{S1\text{-}A+S1\text{-}B+S1\text{-}C}$$

W1 = Weighting for CPU
W4 = Weighting for Motherboard
W6 = Weighting for RAM Memory

S1-A = Breaking level for CPU – e.g. L50
S1-B = Breaking level for Motherboard – L10
S1-C = Breaking level for RAM Memory – L15

Fig. 5

HARDWARE PLATFORM COMPONENT COMPATIBILITY INDEX

Fig. 6

# EUROPEAN SEARCH REPORT

**Application Number**

EP 25 18 7223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN PO-CHIANG ET AL: "Performance Profiling of Cloud Radio Access Networks using OpenAirInterface", 2018 ASIA-PACIFIC SIGNAL AND INFORMATION PROCESSING ASSOCIATION ANNUAL SUMMIT AND CONFERENCE (APSIPA ASC), APSIPA ORGANIZATION, 12 November 2018 (2018-11-12), pages 454-458, XP033525889, DOI: 10.23919/APSIPA.2018.8659532 [retrieved on 2019-03-04] * abstract * * figures 1, 6-11 * * page 454, left-hand column, line 1 - page 455, left-hand column, line 1 * * page 456, right-hand column, line 1 - page 457, right-hand column, line 23 * ----- | 1-15 | INV. G06F9/50 G06F11/34 |
| X | VEITCH PAUL ET AL: "Precise Turbo Frequency Tuning and Shared Resource Optimisation for Energy-Efficient Cloud Native Workloads", 2023 IEEE 9TH INTERNATIONAL CONFERENCE ON NETWORK SOFTWARIZATION (NETSOFT), IEEE, 19 June 2023 (2023-06-19), pages 222-226, XP034377382, DOI: 10.1109/NETSOFT57336.2023.10175455 [retrieved on 2023-07-13] * abstract * * figures 1, 5, 9, 10 * * tables II, III * * page 223, left-hand column, line 13 - page 226, right-hand column, line 23 * ----- | 1-15 | TECHNICAL FIELDS SEARCHED (IPC) G06F |

The present search report has been drawn up for all claims

| Place of search | Date of completion of the search | Examiner |
|---|---|---|
| The Hague | 27 November 2025 | Wirtz, Hanno |

EPO FORM 1503 03.82 (P04C01)